(19) Europäisches Patentamt
European Patent Office
Office européen des brevets

(11) EP 1 229 086 A1

(12) EUROPÄISCHE PATENTANMELDUNG

(43) Veröffentlichungstag:
**07.08.2002 Patentblatt 2002/32**

(51) Int Cl.[7]: **C09D 5/02**, B05D 7/16

(21) Anmeldenummer: **02002565.6**

(22) Anmeldetag: **04.02.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **05.02.2001 DE 10105073**

(71) Anmelder: **BASF AKTIENGESELLSCHAFT**
**67056 Ludwigshafen (DE)**

(72) Erfinder:
- **Schwartz, Manfred**
**83022 Rosenheim (DE)**
- **Bechert, Bertold**
**67269 Grünstadt (DE)**

(74) Vertreter: **Kinzebach, Werner, Dr. et al**
**Patentanwälte,**
**Reitstötter, Kinzebach & Partner,**
**Ludwigsplatz 4**
**67059 Ludwigshafen (DE)**

# (54) Verwendung wässriger Polymerdispersions-Zusammensetzungen für die Beschichtung von Metallteilen

(57) Die Erfindung betrifft die Verwendung von wässrigen Zusammensetzungen, enthaltend:

i) wenigstens eine wässrige Polymerdispersion, deren Polymerisat P eine Glasübergangstemperatur unterhalb 0 °C aufweist und das

- 80 bis 99,5 Gew.-% wenigstens eines monoethylenisch ungesättigten, hydrophoben Monomers A,
- 0,5 bis 10 Gew.-% wenigstens einer ethylenisch ungesättigten Mono- oder Dicarbonsäure oder deren Anhydrid als Monomer B, und gegebenenfalls
- 0 bis 10 Gew.-% eines oder mehrerer von den Monomeren A und B verschiedenen ethylenisch ungesättigten Monomers C, einpolymerisiert enthält, wobei sich die Gewichtsanteile der Monomere A, B und C zu 100 Gew.-% addieren,

ii) wenigstens ein wasserlösliches Salz oder Komplexsalz eines wenigstens zweiwertigen Metallkations,

zur Herstellung einer Basisbeschichtung für die Beschichtung von Bauteilen aus Metall.

EP 1 229 086 A1

## Beschreibung

Die vorliegende Erfindung betrifft die Verwendung wässriger Zusammensetzungen auf Basis von wässrigen Polymerdispersionen als Basisbeschichtung für Bauteile aus Metall.

Bauteile aus Metall, insbesondere Formteile aus Metallblech, finden in vielfältiger Weise als Baustoffe Verwendung, beispielsweise als Fassadenelemente, als Rohrleitungen, z. B. für Zu- und Abluft, zur Verkleidungen von Rohrleitungen, als Regenrinnen und -fallrohre, als Fensterbänke und in jüngerer Zeit auch als Dachbauelemente von Blechdächern.

Zum Schutz vor Witterungseinflüssen, insbesondere zum Schutz vor Korrosion aber auch aus ästhetischen Gründen werden diese Bauteile in der Regel mit einer Beschichtung versehen. Beispielsweise sind Bauteile aus eisenhaltigen Materialien zu Zwecken des Korrosionsschutzes an ihren Oberflächen verzinkt, was diesen Bauteilen ein charakteristisches Aussehen verleiht. Dieses Aussehen ist nicht immer erwünscht. Kupferhaltige Metallteile wiederum bilden unter Witterungseinfluss eine charakteristische Patina, die nicht für jede Anwendung wünschenswert ist. Bei Dachbauelementen aus Metall wiederum ist eine definierte Farbgebung erwünscht, beispielsweise die für Bedachungen typischen Rot-, Braun- oder Schwarztöne.

Bauteile aus Metall, insbesondere aus Metallblech, werden bei ihrer Montage und Bearbeitung häufig starken mechanischen Kräften ausgesetzt, beispielsweise beim Verschrauben, Bohren, Nageln oder Schießen oder beim Anpassen der vorgefertigten, beschichteten Bauteile an die örtlichen Gegebenheiten des Bauobjektes, z. B. durch Knikken, Biegen oder Zuschneiden. Diese Maßnahmen führen zu punktuellen, starken, z. T. plötzlichen Deformationen des Bauteils. Diese Belastungen müssen von der Beschichtung toleriert werden, ohne dass es zu einer Beschädigung der Beschichtung kommt.

Vielfach werden Bauelemente aus Metallblech mittels des Bandbeschichtungs- bzw. Coil-Coating-Verfahrens hergestellt. Das Coil-Coating stellt besonders hohe Anforderungen an die verwendete Beschichtung, da die Bauelemente nach dem Beschichten formgepresst, z. B. durch Prägen, und/oder wieder aufgewickelt oder zugeschnitten werden.

Diese Formen der Beanspruchung, insbesondere die plötzliche Belastung beim Nageln, Schneiden, Bohren, Schießen oder Knicken, führt oft zu einer Ablösung der Beschichtung (Enthaftung) von der Oberfläche des Bauteils, d. h. zu einem Abheben, Abblättern oder Absplittern der Beschichtung, insbesondere in den stark belasteten Bereichen. Dies ist natürlich unerwünscht, denn durch die Beschädigung der Beschichtung gehen sowohl die schützende als auch die ästhetische Wirkung der Beschichtung verloren. Diese Probleme treten beim Verlegen der Bauteile vor Ort besonders dann auf, wenn die Umgebungstemperaturen niedrig sind, z. B. bei Temperaturen unterhalb 10 °C und speziell unterhalb 5 °C.

Zudem sollten die Beschichtungen gegenüber Witterungseinflüssen stabil sein, insbesondere nicht Vergilben, nicht Anschmutzen oder Weißanlaufen.

Im Stand der Technik werden für Bauelemente aus Metall Beschichtungsmittel auf Basis von thermisch härtbaren Polyesterharzen beschrieben. Diese sind in der Regel teuer. Zudem ist es in der Regel erforderlich, diese Harzzubereitungen nach dem Auftragen bei Temperaturen von 180 bis 260 °C über eine längere Zeitdauer einzubrennen, um eine gute Haftung der Beschichtung auf der Metalloberfläche zu erzielen. Für besonders hochwertige Beschichtungen muss das Beschichten und Einbrennen zum Teil mehrfach wiederholt werden. Nachteilig an diesem Verfahren sind die für eine hinreichende Verfestigung erforderlichen lange Dauer des Einbrennprozesses und die hohen Einbrenntemperaturen die zusammen mit den hohen Kosten für die Einsatzmaterialien diese Beschichtungen nur für hochwertige Metallbauteile geeignet erscheinen lassen. Der in der Regel hohe Lösemittelgehalt dieser Beschichtungsmittel ist ebenfalls von Nachteil.

Eine wichtige Klasse lösungsmittelarmer Beschichtungssysteme basiert auf wässrigen Polymerisatdispersionen (siehe R. Kuropka in D. Distler (Hrsg.), "Wässrige Polymerdispersionen", Wiley-VCH 1999, S. 99-124). In der Regel finden derartige Beschichtungsmittel bei Untergründen aus Holz, Papier, Stein oder Beton Anwendung. Diese Beschichtungsmittel weisen häufig eine mäßige oder schlechte Haftung auf Metall auf und erfüllen daher in der Regel nicht die oben genannten Erfordernisse, die an Beschichtungen für Bauteile aus Metall gestellt werden.

Die ältere deutsche Patentanmeldung P 19951068.7 beschreibt die Verwendung von wässrigen Polymerdispersionen, die 0,1 bis 5 Gew.-% siliziumorganische Monomere einpolymerisiert enthalten, als Bindemittel für Beschichtungsmittel, die bei der Herstellung von "Nass-in-Nass"-Beschichtungen als Basisbeschichtung aufgebracht werden. Die so erhaltenen Beschichtungen weisen grundsätzlich eine gute Haftung auf Metalloberflächen auf. Problematisch ist jedoch die Montage der Metallbauteile bei niedrigen Umgebungstemperaturen, da es dann häufig zu Abplatzungen der Beschichtung an den mechanisch belasteten Stellen kommt.

Der vorliegenden Erfindung liegt somit die Aufgabe zugrunde, ein Beschichtungssystem zur Verfügung zu stellen, dass für die Beschichtung von Bauteilen aus Metall, insbesondere Metallblechen geeignet ist.

Es wurde überraschenderweise gefunden, dass Beschichtungen auf Metallbauteilen insbesondere dann gut haften, wenn man auf das Metallbauteil zunächst eine erste wässrige Zusammensetzung aufbringt, die

i) wenigstens eine wässrige Polymerdispersion, deren Polymerisat P eine Glasübergangstemperatur unterhalb 0 °C aufweist und das

- 80 bis 99,5 Gew.-% wenigstens eines monoethylenisch ungesättigten, hydrophoben Monomers A,
- 0,5 bis 10 Gew.-% wenigstens einer ethylenisch ungesättigten Mono- oder Dicarbonsäure oder deren Anhydrid als Monomer B, und gegebenenfalls
- 0 bis 10 Gew.-% eines oder mehrerer von den Monomeren A und B verschiedenen ethylenisch ungesättigten Monomers C, einpolymerisiert enthält, wobei sich die Gewichtsanteile der Monomere A, B und C zu 100 Gew.-% addieren,

ii) wenigstens ein zweiwertiges Metallkation in wasserlöslicher Form enthält.

Demnach betrifft die vorliegende Erfindung die Verwendung derartiger Zusammensetzungen zur Herstellung einer Basisbeschichtung für Bauteile aus Metall sowie ein Verfahren zum Beschichten von Bauteilen aus Metall, bei dem man zunächst die vorstehend definierte Zusammensetzung zur Herstellung einer Basisbeschichtung auf die zu beschichtende Oberfläche des Bauteils und anschließend wenigstens eine weitere Beschichtungszusammensetzung auf die mit der Basisbeschichtung versehene Oberfläche aufbringt.

Die erfindungsgemäß zur Anwendung kommenden wässrigen Zusammensetzungen sind teilweise aus der DE-A 3930585 und der DE-A 3800984 bekannt.

Das in ihnen enthaltene Polymerisat enthält vorzugsweise 90 bis 99 und insbesondere 95 bis 99 Gew.-% Monomere A einpolymerisiert. Der Anteil an Monomeren B beträgt vorzugsweise 1 bis 10 Gew.-% und insbesondere 1 bis 5 Gew.-%.

Die Monomere A sind hydrophob, d. h. sie weisen eine geringe Wasserlöslichkeit auf, die in der Regel weniger als 50 g/l und vorzugsweise weniger als 20 g/l bei 25 °C beträgt. Derartige Monomere werden üblicherweise bei der Emulsionspolymerisation eingesetzt und sind dem Fachmann hinreichend bekannt. Geeignete Monomere A sind beispielsweise Monovinylaromaten, Ester α,β-ethylenisch ungesättigter $C_3$-$C_6$-Monocarbonsäuren mit $C_1$-$C_{18}$-Alkanolen oder $C_5$-$C_{10}$-Cycloalkanolen, sowie die Vinylester und Allylester von aliphatischen $C_2$-$C_{18}$-Carbonsäuren.

Beispiele für Monovinylaromaten sind Styrol, α-Methylstyrol, α-Phenylstyrol, o-Chlorstyrol und Vinyltoluole. Beispiele für Ester α,β-ethylenisch ungesättigter $C_3$-$C_6$-Monocarbonsäuren sind beispielsweise die Ester der Acrylsäure und die Ester der Methacrylsäure mit $C_1$-$C_{18}$-, vorzugsweise $C_1$-$C_{10}$-Alkanolen, oder $C_5$-$C_{10}$-Cycloalkanolen, z. B. Methylacrylat, Methylmethacrylat, Ethylacrylat, Ethylmeth-acrylat, n-Butylacrylat, n-Butylmethacrylat, Isobutylacrylat, Isobutylmethacrylat, tert.-Butylacrylat, tert.-Butylmethacrylat, Hexylacrylat, Hexylmethacrylat, n-Octylacrylat, n-Octylmethacrylat, 2-Ethylhexylacrylat, 2-Ethylhexylmethacrylat, iso-Bornyl-acrylat, iso-Bornylmethacrylat, Norbornylacrylat, Norbornylmeth-acrylat, 4-tert.-Butylcyclohexylacrylat und 4-tert.-Butylcyclohexylmethacrylat. Beispiele für Vinyl- und Allylester aliphatischer $C_2$-$C_{18}$-Carbonsäuren sind Ester der Essigsäure, der Propionsäure, der Buttersäure, der Valeriansäure, der Pivalinsäure, der Hexansäure, der Decansäure, der Laurinsäure und der Stearinsäure sowie die im Handel unter den Bezeichnungen VEOVA® 5-11 (VEOVA® X ist ein Handelsname der Fa. Shell und steht für Vinylester von α-verzweigten, aliphatischen Carbonsäuren mit X C-Atomen, die auch als Versatic® X-Säuren bezeichnet werden) erhältlichen Monomere.

Bevorzugte Monomere A sind monovinylaromatische Monomere, insbesondere Styrol, α-Methylstyrol und o-Chlorstyrol, besonders bevorzugt Styrol, Ester der Acrylsäure mit $C_2$-$C_8$-Alkanolen, vorzugsweise Ethylacrylat, n-Butylacrylat und 2-Ethylhexylacrylat, besonders bevorzugt n-Butylacrylat, und Ester der Methacrylsäure mit $C_1$-$C_4$-Alkanolen, vorzugsweise Methylmethacrylat, Ethylmethacrylat, n-Butylmethacrylat, Isobutylmethacrylat und tert.-Butylmethacrylat, besonders bevorzugt Methylmethacrylat.

Bevorzugt werden filmbildende Copolymere verwendet, die als Monomere A wenigstens ein Monomer A1, ausgewählt unter vinylaromatischen Monomeren und den $C_1$-$C_4$-Alkylestern der Methacrylsäure, insbesondere unter Styrol und Methylmethacrylat, und wenigstens ein zweites Monomer A2, ausgewählt unter den $C_2$-$C_{10}$-Alkylestern der Acrylsäure, insbesondere unter Ethylacrylat, n-Butylacrylat und 2-Ethylhexylacrylat. Als Monomere A1 sind die vinylaromatischen Monomere bevorzugt. Das Gewichtsverhältnis der Monomere A1 zu den Monomeren A2 liegt bevorzugt im Bereich von 1:20 bis 1:2 und insbesondere im Bereich von 1:10 bis 1:3.

Monomere B sind vorzugsweise ausgewählt unter α,β-ethylenisch ungesättigten $C_3$-$C_6$-Mono- und $C_4$-$C_8$-Dicarbonsäuren, sowie deren Salzen. Beispiele für derartige Monomere B sind Crotonsäure, Acryloyloxyglycolsäure, Methacrylamidoglycolsäure, Maleinsäure, Fumarsäure, Itaconsäure und Citraconsäure und die Anhydride dieser Dicarbonsäuren. Bevorzugt sind insbesondere Acrylsäure und Methacrylsäure.

Als Monomere C kommen grundsätzlich alle von den Monomeren A und B verschiedene, mit diesen copolymerisierbare Monomere in Betracht, wobei der Anteil an mehrfach ethylenisch ungesättigten Monomeren vorzugsweise

weniger als 0,5 Gew.-%, insbesondere weniger als 0,1 Gew.-% und insbesondere 0 Gew.-% der Gesamtmonomermenge beträgt.

Bevorzugte Monomere C sind die N-substituierten oder unsubstituierten Amide der vorstehend genannten Mono- und Dicarbonsäuren, insbesondere Acrylamid und Methacrylamid, die Hydroxyalkylester der vorgenannten ethylenisch ungesättigten Mono- und Dicarbonsäuren, z. B. Hydroxyethylacrylat, Hydroxypropylacrylat, 4-Hydroxybutylacrylat sowie die entsprechenden Hydroxyalkylmethacrylate. Geeignet sind weiterhin weiterhin wasserlösliche N-Vinyllactame, z. B. N-Vinylpyrrolidon, ethylenisch ungesättigte Nitrile wie Acrylnitril und Methacrylnitril, weiterhin Harnstoff- bzw. Imidazolidinongruppen enthaltende Monomere wie N-Vinylharnstoff, N-Acrylamidoethylimidazolidin-2-on, N-Methacrylamidoethylimidazolidin-2-on und Siloxan-Gruppen enthaltende Monomere wie Vinyltrimethoxysilan, Vinyltriethoxysilan, Vinyldimethoxysilanol, Vinyldiethoxysilanol, Allyltriethoxysilan, Allyltripropoxysilan, Acryloxyethyltrimethoxysilan, Acryloxypropyltrimethoxysilan, Methacryloxyethyltrimethoxysilan und Methacryloxypropyltrimethoxysilan. Der Anteil der Monomere C an der Gesamtmonomermenge beträgt in der Regel nicht mehr als 10 Gew.-%. Der Anteil an Amiden, Hydroxyalkylestern und/oder Harnstoff- bzw. Imidazolidinongruppen tragenden Monomeren B liegt, sofern erwünscht, im Bereich von 0,1 bis 10 Gew.-% und insbesondere im Bereich von 0,5 bis 5 Gew.-%. Der Anteil an Monomeren mit Siloxangruppe liegt in der Regel, sofern erwünscht im Bereich von 0,1 bis 5 Gew.-%, insbesondere im Bereich von 0,2 bis 2 Gew.-%.

Die Glasübergangstemperatur der in den erfindungsgemäßen Zubereitungen enthaltenen Polymerisate P wird vorzugsweise einen Wert von -10 °C nicht überschreiten und liegt insbesondere im Bereich von -40 °C bis -10 °C und besonders bevorzugt im Bereich von -30 °C bis -10 °C.

Bei Zusammensetzungen, die unterschiedliche Polymerisate mit unterschiedlichen Glasübergangstemperaturen enthalten, ist es in der Regel vorteilhaft, wenn zumindest die Hauptmenge und insbesondere wenigstens 80 Gew.-% der Polymerisate eine Glasübergangstemperatur $T_g$ in diesen Bereichen liegt. Solche Zubereitungen sind z. B. Mischungen zweier oder mehrerer unterschiedlicher Copolymerisate oder sogenannte Stufenpolymerisate, also Polymerisate deren Polymerteilchen einen mehrphasigen Aufbau, z. B. einen Kern-Schale-Aufbau aufweisen.

Unter der Glasübergangstemperatur $T_g$ wird hier die gemäß ASTM D 3418-82 durch Differentialthermoanalyse (DSC) ermittelte "midpoint temperature" verstanden (vgl. Ullmann's Encyclopedia of Industrial Chemistry, 5th Edition, Volume A 21, VCH Weinheim 1992, S. 169 sowie Zosel, Farbe und Lack 82 (1976), S. 125-134, siehe auch DIN 53765).

Die Einstellung der Glasübergangstemperatur $T_g$ auf einen gewünschten Wert kann sowohl durch Auswahl der entsprechenden Monomere als auch der Mengenverhältnisse der eingesetzten Monomere in dem Copolymerisat oder den Copolymerisaten erfolgen.

In diesem Zusammenhang erweist es sich als hilfreich, die Glasübergangstemperatur $T_g$ des Copolymeren P abzuschätzen. Nach Fox (T.G. Fox, Bull. Am. Phys. Soc. (Ser. II) 1, 123 [1956] und Ullmanns Enzyklopädie der technischen Chemie, Weinheim (1980), S. 17-18) gilt für die Glasübergangstemperatur von schwach vernetzten Mischpolymerisaten bei großen Molmassen in guter Näherung

$$\frac{1}{T_g} = \frac{X^1}{T_g^{\,1}} + \frac{X^2}{T_g^{\,2}} + \ldots\ldots \frac{X^n}{T_g^{\,n}}$$

wobei $X^1, X^2, \ldots, X^n$ die Massenbrüche der Monomeren 1, 2, ..., n und $T_g^1, T_g^2, \ldots, T_g^n$ die Glasübergangstemperaturen der jeweils nur aus einem der Monomeren 1, 2, ..., n aufgebauten Polymeren in Grad Kelvin bedeuten. Letztere sind z. B. aus Ullmann's Encyclopedia of Industrial Chemistry, VCH, Weinheim, Vol. A 21 (1992) S. 169 oder aus J. Brandrup, E. H. Immergut, Polymer Handbook 3rd ed, J. Wiley, New York 1989 bekannt.

Es hat sich als vorteilhaft erwiesen, wenn die Polymerteilchen des Polymerisats P mittlere Teilchengrößen im Bereich von 50 bis 1000 nm, insbesondere 50 bis 500 nm, besonders bevorzugt 60 bis 300 nm aufweisen. Unter mittleren Teilchengrößen versteht man hier die volumen- bzw. gewichtsmittleren Größen, wie sie durch Messung mit der Ultrazentrifuge oder durch Lichtstreuung nach bekannten Verfahren erhalten werden. Verfahren zur Einstellung der Polymerteilchengröße sind beispielsweise aus der EP-A-126 699, der EP-A-567 881, der EP-A-567 819, der DE-A-31 47 008 und der DE-A-42 13 967 bekannt.

Weiterhin enthalten die erfindungsgemäß verwendeten Zusammensetzungen wenigstens ein wenigstens zweiwertiges, z. B. zwei-, dreioder vierwertiges Metallkation in Form eines wasserlöslichen Salzes oder Komplex-Salzes. Dementsprechend hat das mehrwertige Metallkation eine Ladungszahl von wenigstens 2, z. B. von 2 bis 4. Beispiele für derartige Metallkationen sind Erdalkalikationen wie $Mg^{2+}$, $Ca^{2+}$, $Sr^{2+}$, oder $Ba^{2+}$, weiterhin $Al^{3+}$, $Zn^{2+}$, $Sn^{2+}$, $Co^{2+}$, $Pb^{2+}$, $Ni^{2+}$, $Cu^{2+}$, $Mn^{2+}$, $Cr^{3+}$, $Ti^{4+}$ bzw. $TiO^{2+}$, $Zr^{4+}$ bzw. $ZrO^{2+}$, $V^{3+}$, $VO^{3+}$, $VO^{2+}$. Bevorzugt sind Erdalkalimetallkationen und insbesondere Calcium sowie Zink, jeweils in wasserlöslicher Form, d. h. in Form eines wasserlöslichen Salzes oder Komplexsalzes oder in Form einer Mischung aus einem gegebenenfalls schwerlöslichen Salz und einem geeigneten löslichkeitsvermittelnden Liganden (Komplexbildner).

Unter dem Begriff "wasserlöslich" versteht man hier, dass der Einsatzstoff, d. h. das Salz oder Komplexsalz, welcher das Metallion enthält, in der wässrigen Phase der Zusammensetzung oder der wässrigen Dispersion des Polymeren P, gegebenenfalls in Gegenwart eines löslichkeitsvermittelnden Liganden (Komplexbildnern), eine hinreichende Löslichkeit aufweist, so dass die gewünschte Einsatzmenge in der Zusammensetzung im Wesentlichen vollständig, d. h. rückstandsfrei, gelöst wird.

Beispiele für geeignete Salze sind die Salze anorganischer oder organischer Säuren wie die Sulfate, Sulfite, Nitrate, Chloride, Bromide, Formiate, Acetate sowie lösliche Oxide oder Hydroxide. Sofern die Salze in eine saure Dispersion eingearbeitet werden sollen, kann man selbstverständlich auch basische schwerlösliche Salze einsetzen, die von Säuren bekanntermaßen in eine wasserlösliche Form überführt werden, z. B. weniger lösliche Oxide oder Hydroxide. Gegebenenfalls setzt man den Salzen zur Verbesserung der Löslichkeit Komplexbildner (löslichkeitsvermittelnde Liganden) zu, beispielsweise Alkalimetallsalze der Oxalsäure, der Weinsäure, der Citronensäure, der Ethylendiamintetraessigsäure, der Nitrilotriessigsäure, von Pyrophosphorsäuren oder von Aminosäuren oder Aminosäurederivaten wie Alanin, Glycin, Valin, Norvalin, Leucin, Norleucin, N-Methyl- und N-Ethylaminoessigsäure, N-Phenylaminoessigsäure, Nicotinsäure und ganz besonders bevorzugt Ammoniak.

Beispiele für geeignete Salze sind Magnesiumoxid, Magnesiumhydroxid, Magnesiumchlorid, Magnesiumacetat, Calciumacetat, Calciumchlorid, Calciumhydroxid, Strontiumhydroxid, Bariumhydroxid, Blei(II)acetat, Titan(IV) oxiddiacetat (Titanylacetat), Zirkonylacetat, Aluminiumsulfat, Aluminiumacetat und Aluminiumhydroxid. Höherwertige, d. h. drei- oder vierwertige Kationen wird man häufig auch als Chelat-Komplexe, z. B. als Acetylacetonate wie Al(III)-acetylacetonat, Cr(III)-acetylacetonat, Zn(II)-acetylacetonat, Ti(IV)tris(acetylacetonat)chlorid, oder als Metallalkoholate wie Tetramethylorthotitanat, oder Tetraethylorthotitanat einsetzen.

Besonders bevorzugt sind Salze des Calciums wie Calciumchlorid, Calciumoxid, Calciumhydroxid, Calciumacetat sowie Salze des Zinks wie Zinkoxid, Zinkchlorid, Zinkhydroxid sowie die Aminkomplexe des Zinks, wie sie z. B. in einer ammoniakalischen Lösung von Zinkammoniumhydrogencarbonat vorliegen und die man z. B. durch Auflösen von ZnO und Ammoniumhydrogencarbonat in wässrigem Ammoniak, vorzugsweise in konzentrierter oder halbkonzentrierter, wässriger Ammoniaklösung herstellen kann.

In der Regel setzt man die Metallsalze bwz. Komplexsalze in einer Menge von 0,1 bis 2 Ladungsäquivalenten, vorzugsweise 0,15 bis 1,5 Ladungsäquivalenten und insbesondere 0,2 bis 1,2 Ladungsäquivalenten je Mol Carboxylgruppe im Polymerisat P ein, wobei im Falle von $TiO^{2+}$, $ZrO^{2+}$, $VO^{3+}$ und $VO^{2+}$ eine Ladungszahl von 2 bzw. 3 zugrunde gelegt wird. Besonders bevorzugt sind solche Zusammensetzungen, in der das Metallkation bezogen auf die Carboxylgruppen im Polymerisat P in nahezu äquivalenter Menge vorliegt, d. h. im Falle von zweiwertigen Kationen wie $Zn^{2+}$ oder $Ca^{2+}$ in einer Menge von 0,5 Mol Metallion bezogen auf 1 Mol Carboxylgruppen.

Die Einarbeitung der Metallionen in die wässrige Dispersion des Polymeren P erfolgt in der Regel durch Zugabe einer Lösung des Metallsalzes in Wasser oder in einem geeigneten, mit Wasser mischbaren organischen Lösungsmittel, z. B. in einem $C_1$-$C_4$-Alkohol wie Methanol oder Ethanol oder in einer Wasser/Lösungsmittelmischung. Die Zugabe kann auch als Feststoff oder als Suspension in Wasser oder einem geeigneten, mit Wasser mischbaren Lösungsmittel erfolgen, beispielsweise im Falle des Zinkoxids und des Calciumoxids. Die Dispersion, in die das Metallsalz eingearbeitet werden soll, weist vorzugsweise einen pH-Wert oberhalb 5, insbesondere oberhalb 6, und speziell im Bereich von 7 bis 10 auf.

Die in den erfindungsgemäßen Zusammensetzungen enthaltenen wässrigen Dispersionen der Polymerisate P sind bekannt und z. T. im Handel erhältlich oder können nach bekannten Methoden hergestellt werden.

In der Regel erfolgt ihre Herstellung durch radikalische wässrige Emulsionspolymerisation in Gegenwart oberflächenaktiver Substanzen wie Emulgatoren und/oder Schutzkolloiden nach an sich bekannten Verfahren. Geeignete Herstellungsverfahren sind beschrieben in "Encyclopedia of Polymer Science and Technology", Vol. 5, Wiley & Sons Inc., NY 1966, S. 847 sowie in den eingangs zitierten DE-A 3930585 und DE-A 3800984. Die Herstellung von Polymerisaten mit mehrphasigen Polymerteilchen ist durch sequentielle Verfahren möglich, wie sie z. B. in der EP-555 959, EP-308 753 und EP-654 454 beschrieben werden.

Geeignete oberflächenaktive Substanzen für die Herstellung der Polymerisate sind bekannt und umfassen in der Regel übliche anionische, kationische und nichtionische Emulgatoren.

Für die anwendungstechnischen Eigenschaften der Zusammensetzung hat es sich als vorteilhaft erwiesen, wenn sie wenigstens einen anionischen Emulgator und insbesondere eine Mischung aus wenigstens einem anionischen und wenigstens einem nichtionischen Emulgator enthalten.

Die erfindungsgemäß zur Anwendung kommenden Zusammensetzungen enthalten herstellungsbedingt die oberflächenaktiven Verbindungen üblicherweise in Mengen von 0,1 bis 10 Gew.-%, vorzugsweise 0,5 bis 5 Gew.-%, bezogen auf die Gesamtmenge an Polymerisat P.

Geeignete anionische Emulgatoren sind beispielsweise Alkali- und Ammoniumsalze von Alkylsulfaten (Alkylrest: $C_8$-$C_{12}$), von Schwefelsäurehalbestern ethoxylierter Alkanole (EO-Grad: 2 bis 50, Alkylrest: $C_{12}$ bis $C_{18}$), von Schwefelsäurehalbestern ethoxylierter Alkylphenole (EO-Grad: 2 bis 50, Alkylrest: $C_4$ bis $C_{18}$), von Alkylsulfonsäuren (Alkylrest: $C_{12}$ bis $C_{18}$) und von Alkylarylsulfonsäuren (Alkylrest: $C_4$ bis $C_{18}$). Geeignete nichtionische Emulgatoren

sind beispielsweise aliphatische nichtionische Emulgatoren, beispielsweise Ethoxylate langkettiger Alkohole (EO-Grad: 3 bis 50, Alkylrest: $C_8$-$C_{36}$), sowie Polyethylenoxid/Polypropylenoxid-Blockcopolymere. Bevorzugt werden Ethoxylate langkettiger Alkanole (Alkylrest: $C_{10}$-$C_{22}$, mittlerer Ethoxylierungsgrad: 3 bis 50) und darunter besonders bevorzugt solche auf Basis von Oxoalkoholen und nativen Alkoholen mit einem linearen oder verzweigten $C_{12}$-$C_{18}$-Alkylrest und einem Ethoxilierungsgrad von 8 bis 50.

Für die Eigenschaften der erfindungsgemäß verwendeten Zusammensetzungen hat es sich als besonders vorteilhaft erwiesen, wenn die anionischen Emulgatoren wenigstens eine Verbindung der Formel I umfassen,

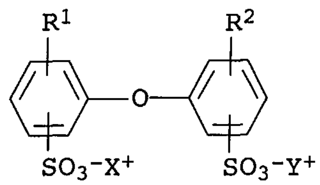

(I)

worin $R^1$ und $R^2$ unabhängig voneinander für Wasserstoff oder einen linearen oder verzweigten Alkylrest mit 4 bis 24 C-Atomen stehen und nicht gleichzeitig Wasserstoff sind, und $X^+$ und $Y^+$ gleich oder verschieden sind und für ein einwertiges Kation oder ein Kationenäquivalent stehen. Vorzugsweise stehen $X^+$ und $Y^+$ in Formel I für Alkalimetallkationen und/oder Ammoniumionen und insbesondere für ein Natriumkation. $R^1$ und $R^2$ stehen vorzugsweise für lineare oder verzweigte Alkylreste mit 10 bis 18 C-Atomen oder für Wasserstoff. Die Verbindungen der Formel I sind bekannt, z. B. aus der EP-A-469 295. Häufig werden technische Gemische verwendet, die einen Anteil von 50 bis 90 Gew.-% des monoalkylierten Produktes aufweisen, beispielsweise DOWFAX® 2A1 (Warenzeichen der Dow Chemical Company). Bevorzugt sind auch Mischungen von Verbindungen der Formel I mit weiteren anionischen Emulgatoren. Besonders bevorzugt ist eine Verbindung der allgemeinen Formel I alleiniger anionischer Emulgator.

Die erfindungsgemäß zur Anwendung kommenden Zusammensetzungen enthalten in einer Ausführungsform der Erfindung neben dem Polymerisat P und dem wenigstens einen Metallion in wasserlöslicher Form als Bestandteil iii) wenigstens einen anorganischen Füllstoff, oder wenigstens ein, vorzugsweise anorganisches Pigment, oder eine Pigment/Füllstoffmischung. Die Gesamtmenge an Füllstoff und Pigment ist in der Regel so bemessen, das die Zusammensetzung 5 bis 300 Gew.-Teile, vorzugsweise 10 bis 200 Gew.-Teile Pigment plus Füllstoff je 100 Gew.-Teile Polymerisat P enthält. In einer anderen Ausführungsform enthalten die Zusammensetzungen keinen Füllstoff und kein Pigment. Selbstverständlich kann man die Zusammensetzungen auch ohne Füllstoff aber mit Pigment formulieren. Der Pigmentanteil bestimmt den Farbeindruck der Beschichtung und beträgt bei pigmenthaltigen Zusammensetzungen in der Regel 5 bis 50 Gew.-Teile Pigment auf 100 Gew.-Teile Polymerisat P.

Der Gehalt an Füllstoffen und Pigmenten in der Zusammensetzung wird häufig auch durch die Pigmentvolumenkonzentration PVK beschrieben. Die Pigmentvolumenkonzentration ist der mit 100 multiplizierte Quotient aus der Summe von Pigmentvolumen plus Füllstoffvolumen, geteilt durch das Gesamtvolumen von Pigment, Füllstoff plus filmbildende Bestandteile (hier Polymerisat P). Üblicherweise liegt die Pigmentvolumenkonzentration der erfindungsgemäßen Polymerzubereitungen im Bereich von 0 bis 50. Aus Kostengründen ist es vorteilhaft, die Zusammensetzungen pigmentiert/gefüllt einzusetzen. Die Pigmentvolumenkonzentration liegt in den erfindungsgemäß verwendeten wässrigen Zubereitungen, vorzugsweise im Bereich von 1 bis 50, z. B. von etwa 4, etwa 10, etwa 27 oder etwa 45.

Der Anteil an Polymerisat P in den erfindungsgemäßen Zusammensetzungen beträgt in der Regel 10 bis 50 Gew.-%, vorzugsweise 35 bis 45 Gew.-%, bezogen auf das Gesamtgewicht der Zusammensetzung. Der Gesamtfeststoffgehalt beträgt in der Regel 30 bis 70 Gew.-%, wobei in pigmentiert/gefüllten Formulierungen der Anteil der Komponente iii) an der Zusammensetzung in Abhängigkeit von der gewünschten PVK im Bereich von 2 bis 60 Gew.-% liegt.

Bezogen auf das Gesamtgewicht der in ihnen enthaltenen Feststoffe enthalten die Zusammensetzungen typischerweise, :

i) 20 bis 90 Gew.-% Polymerisat P,

ii) 0,1 bis 5 Gew.-% Metallionen

iii) 0 bis 25 Gew.-%, z. B. 2 bis 25 Gew.-%, wenigstens eines Pigments und/oder 0 bis 60 Gew.-%, z. B. 10 bis 60 Gew.-% wenigstens eines Füllstoffs, wobei die Gesamtmenge an Pigment + Füllstoff in der Regel eine Gesamtmenge von 75 Gew.-% nicht überschreitet, und

iv) 0,1 bis 20 Gew.-%, vorzugsweise 0,5 bis 10 Gew.-% übliche Hilfsmittel.

Als Pigmente kommen grundsätzlich alle für die Einarbeitung in wässrige Polymerdispersionen geeignete Pigmente in Betracht, wobei sich die Art des eingesetzten Pigments typischerweise nach dem gewünschten Farbton richtet. Typische Pigmente sind anorganische Weißpigmente wie Titandioxid, vorzugsweise in der Rutilform. Die Zubereitungen enthalten häufig farbige Pigmente, vorzugsweise auf Basis von Eisenoxiden, Ruß oder Graphit, Ultramarin, Manganschwarz, Antimonschwarz, Manganviolett, Pariser Blau oder Schweinfurter Grün.

Geeignete Füllstoffe sind z. B. Alumosilicate, wie Feldspäte, Silicate, wie Kaolin, Talkum, Glimmer, Magnesit, bevorzugt Erdalkalicarbonate, wie Calciumcarbonat, beispielsweise in Form von Calcit oder Kreide, Magnesiumcarbonat, Dolomit, Erdalkalisulfate, wie Calciumsulfat, Siliziumdioxid etc. Die Füllstoffe können als Einzelkomponenten eingesetzt werden.

Zu den üblichen Hilfsmitteln zählen neben den bei der Polymerisation eingesetzten Emulgatoren Netz- oder Dispergiermittel, wie Natrium-, Kalium- oder Ammoniumpolyphosphate, Alkalimetall- und Ammoniumsalze von Polyacrylsäuren und von Polymaleinsäure, Polyphosphonate, wie 1-Hydroxyethan-1,1-diphosphonsaures Natrium sowie Naphthalinsulfonsäuresalze, insbesondere deren Natriumsalze. Die Dispergiermittel werden in der Regel in einer Menge von 0,1 bis 0,6 Gew.-%, bezogen auf das Gesamtgewicht der wässrigen Zubereitung, eingesetzt.

Ferner zählen zu den Hilfsmitteln gegebenenfalls auch Verdickungsmittel, beispielsweise Cellulosederivate, wie Methylcellulose, Hydroxyethylcellulose und Carboxymethylcellulose, ferner Casein, Gummiarabikum, Tragantgummi, Stärke, Natriumalginat, Polyvinylalkohol, Polyvinylpyrrolidon, Natriumpolyacrylate, wasserlösliche Copolymerisate auf Acryl- und Methacrylsäurebasis, wie Acrylsäure/Acrylamid- und Methacrylsäure/Acrylester-Copolymerisate und sogenannte Assoziativverdicker, beispielsweise Styrol-Maleinsäureanhydrid-Polymerisate, Styrol-Acrylsäure-Butylacrylat-Terpolymere oder hydrophob modifizierte Polyetherurethane.

Auch anorganische Verdickungsmittel, z. B. Bentonite oder Hektorit, können verwendet werden.

Die Menge der Verdicker hängt von der gewünschten Verarbeitungsviskosität der Zusammensetzung ab. Für übliche Beschichtungsmaßnahmen hat es sich bewährt, wenn die Verarbeitungsviskosität im Bereich von 2000 bis 10000 mPa.s, und insbesondere im Bereich von 3000 bis 6000 mPa.s liegt, bestimmt als Brookfield-Viskosität (Spindel 5, 20 U/min, 25 °C). Im Allgemeinen werden die Verdickungsmittel, sofern erforderlich, in Mengen von 0,1 bis 3 Gew.-%, vorzugsweise 0,1 bis 1 Gew.-%, bezogen auf das Gesamtgewicht der wässrigen Zubereitung, verwendet.

Ferner zählen zu den Hilfsmitteln in der Regel auch Entschäumer, Konservierungs- oder Hydrophobiermittel, Biozide oder weitere Bestandteile.

Die erfindungsgemäßen Zusammensetzungen können außerdem 0,1 bis 5 Gew.-% photoempfindliche Initiatoren enthalten. Diese dienen dazu, in der Oberfläche der Beschichtung Vernetzungsreaktionen hervorzurufen. Geeignete Photoinitiatoren sind beispielsweise in der EP-A 010000, der DE-A 4318083 oder der EP-A 624610 beschrieben. Geeignete Photoinitiatoren enthalten eine Gruppe, die in der Lage ist, einen Teil des Sonnenlichts zu absorbieren. Der Photoinitiator kann sowohl in Form einer photoempfindlichen Verbindung, als auch in Form eines photoempfindlichen Oligomers oder Polymers als Additiv zu dem Bindemittel gegeben werden. Ebenso ist es möglich, die photoempfindliche Gruppe chemisch an das Polymer, beispielsweise durch Copolymerisation zu binden.

Bevorzugte Photoinitiatoren sind Benzophenonderivate, in denen gegebenenfalls einer oder beide Phenylringe substituiert sind, beispielsweise mit $C_1$-$C_4$-Alkyl, Hydroxy, Chlor, Carboxy-$C_1$-$C_4$-alkyl, Nitro, Amino etc. Beispiele für geeignete Benzophenonderivate umfassen 4-Methylbenzophenon, 4-Hydroxybenzophenon, 4-Aminobenzophenon, 4-Chlorbenzophenon, 4-Carboxybenzophenon, 4,4'-Dimethylbenzophenon, 4,4'-Dichlorbenzophenon, 4-Carboxymethylbenzophenon, 3-Nitrobenzophenon. Ebenfalls geeignet sind substituierte Phenylketone, z. B. substituierte Phenylacetophenone und ähnliche. Besonders bevorzugt wird Benzophenon oder 4-substituiertes Benzophenon.

Außerdem kann das Polymerisat P einpolymerisierte Photoinitiatoren in den oben genannten Mengen aufweisen. In diesem Fall erhält man das Polymerisat P durch Copolymerisation mit Monomeren, die photosensible Gruppen aufweisen. Monomere, die photoempfindliche Gruppen enthalten, sind beispielsweise in der US-A 3,429,852, der US-A 3,574,617, der US-A 4,148,987 und der eingangs zitierten DE-A 3930585 offenbart. Hierbei handelt es sich um Verbindungen, die einen photosensiblen Molekülteil, der vorzugsweise von Benzophenon oder substituiertem Benzophenon abgeleitet ist, und eine daran gebundene, vorzugsweise nicht in Konjugation zum photosensiblen Molekülteil angeordnete olefinische Doppelbindung, z.B. in Form einer Allyl-, (Meth)Acrylat- oder (Meth)Acrylamid-Gruppe aufweisen. Hierzu zählen beispielsweise Allylbenzoylbenzoate oder Vinylbenzoylbenzoate. Bevorzugt wird Vinylbenzylmethylbenzoylbenzoat, Hydroxymethacryloxypropylmethylbenzoylbenzoat, Hydroxymethacryloxypropylbenzoylbenzoat und Hydroxymethacryloxypropoxybenzophenon.

Die Erfindung betrifft außerdem ein Verfahren zum Beschichten von Bauteilen aus Metall, bei dem man in einem ersten Schritt eine der vorstehend definierten, wässrigen Zusammensetzungen als Basisbeschichtung auf die zu beschichtende Oberfläche des Bauteils aufbringt und anschließend wenigstens eine weitere Beschichtungszusammensetzung auf die mit dem Primer versehene Oberfläche aufbringt.

Im erfindungsgemäßen Verfahren wird die erste Beschichtungszusammensetzung in der Regel in einer Menge von 50 bis 500 $g/m^2$, vorzugsweise in einer Menge von 100 bis 400 $g/m^2$, gerechnet als trockene Beschichtung aufgebracht. Die Auftragsmenge der für die zweite Beschichtung verwendeten Zusammensetzung wird in der Regel

so gewählt, dass eine Beschichtungsstärke im Bereich von 20 bis 500 $g/m^2$, vorzugsweise 50 bis 250 $g/m^2$ resultiert.

Das Aufbringen der ersten Zusammensetzung erfolgt in der Regel durch Spritzen, Rakeln, Gießen, Streichen oder Walzen. Das Aufbringen der zweiten Polymerzubereitung erfolgt in der Regel in gleicher Weise.

Nach dem Aufbringen der Basisbeschichtung und vor dem Aufbringen der weiteren Beschichtungszusammensetzung kann ein Trocknungsschritt vorgesehen sein, bei dem die erste Beschichtungszusammensetzung vollständig oder nahezu vollständig, d. h. bis zu einem Restfeuchtegehalt von weniger als 5 Gew.-%, bezogen auf das Gesamtgewicht der trockenen Beschichtung, getrocknet wird. Die Trocknung erfolgt in der Regel bei Umgebungstemperatur oder erhöhter Temperatur, die z. B. von 30 °C bis 200 °C betragen kann. Die Trocknungsdauer liegt dann in der Regel im Bereich von wenigen Minuten bis 48 h, vorzugsweise von 10 bis 240 Minuten, wobei Trocknungsdauer und -temperatur in bekannter Weise voneinander abhängen, so dass der Fachmann den gewünschten Trocknungsgrad in einfacher Weise über Dauer und Temperatur festlegen kann.

In einer anderen Ausführungsform des erfindungsgemäßen Verfahrens erfolgt das Aufbringen der zweiten, bzw. der weiteren Beschichtung nach einem sogenannten "nass-in-nass" Verfahren.

Unter dem Begriff "nass-in-nass" Verfahren versteht man im Allgemeinen ein Beschichtungsverfahren, bei dem man zunächst eine erste fließfähige, vorzugsweise wässrige Beschichtungszusammensetzung auf die zu beschichtende Metalloberfläche und anschließend eine zweite Beschichtungszusammensetzung auf die mit der Erstbeschichtung versehene Oberfläche aufbringt, bevor die erste Beschichtung ihre Endfestigkeit erreicht hat. Ein Maß für die Endfestigkeit ist im erfindungsgemäßen Verfahren der Wassergehalt der aufgetragenen ersten Zusammensetzung, der in der Regel wenigstens 5 Gew.-%, bevorzugt wenigstens 10 Gew.-% und besonders bevorzugt wenigstens 15 Gew.-% betragen sollte, bezogen auf die trockene Beschichtung, bevor die zweite oder weitere Beschichtungszusammensetzung aufgetragen wird. Selbstverständlich kann die zweite Zusammensetzung sowohl direkt nach dem Aufbringen der ersten Zusammensetzung oder nach einem zur Verringerung der Restfeuchte durchgeführten Trocknungsschritt aufgebracht werden. Eine Art teilweises Trocknen bzw. Tempern kann z. B. dadurch erreicht werden, dass die erste Zubereitung auf einen vorgewärmten Gegenstand aufgebracht wird. Geeignete Vorwärmtemperaturen oder zum Tempern geeignete Temperaturen liegen im Bereich von 30 bis 100 °C wobei diese Temperaturen naturgemäß von der Verarbeitungsgeschwindigkeit abhängt.

In einer bevorzugten Variante dieses "nass-in-nass" Verfahrens bringt man nach dem Auftragen der Basisbeschichtung und vor dem Auftrag der zweiten Schicht ein festes, nicht filmbildendes, teilchenförmiges Gut auf die noch feuchte erste Beschichtung auf.

Unter einem teilchenförmigen Gut versteht man im Rahmen dieser Erfindung feinteilige, riesel- bzw. streufähige und im Wesentlichen wasserunlösliche, nicht filmbildende Teilchen. Beispiele für geeignete teilchenförmige Güter sind z. B. mineralische Teilchen, wie Sand, Kies, mineralischen Granulate, insbesondere Splitt, Tonteilchen, Kreiden oder Bimsstein, organische Teilchen, wie Holzteilchen und Kork- oder Kunststoffgranulat, sowie metallische Teilchen, z. B. Metallspäne. Dabei sind mineralische und organische Teilchen bevorzugt. Das teilchenförmige Gut weist in der Regel eine mittlere Teilchengröße oberhalb 0,1 mm, z. B, Korngrößen im Bereich von 0,1 bis 3 mm auf. Das teilchenförmige Gut wird dann durch die zweite Schicht gebunden.

Teilchenförmige Güter werden, sofern erwünscht, in der Regel in einer Menge von 5 bis 750 $g/m^2$, insbesondere 10 bis 500 $g/m^2$ aufgebracht. Mineralische Teilchen und organische Teilchen werden insbesondere in einer Menge von 10 bis 250 $g/m^2$ aufgebracht.

Das Aufbringen des teilchenförmigen Guts erfolgt vorzugsweise als Suspension oder Feststoff, bevorzugt als Feststoff. Geeignete Verfahren zum Aufbringen eines solchen teilchenförmigen Guts sind dem Fachmann bekannt. Das Aufbringen erfolgt vorzugsweise durch Aufstreuen oder Aufrieseln oder durch Eintauchen des mit der ersten Zubereitung versehenen Gegenstands in das teilchenförmige Gut. Überschüssiges Gut wird anschließend beispielsweise durch Abklopfen, Rütteln oder durch Abblasen entfernt, bevor die zweite Beschichtung aufgebracht wird.

In beiden Ausführungsformen des erfindungsgemäßen Verfahrens kann man selbstverständlich auf die zweite Beschichtung auch eine dritte oder weitere Beschichtungen aufbringen und zwar sowohl nach einen Trocknungsschritt, wenn die zuvor aufgebrachte Beschichtung ihre Endfestigkeit nahezu oder vollständig erreicht hat, oder nach der Vorgehensweise des "nass-in-nass-Verfahrens".

Im Anschluss an das Aufbringen der zweiten Beschichtung erfolgt in der Regel ein weiterer Trocknungsschritt, der abhängig von der Trocknungsdauer bei Umgebungstemperatur oder erhöhter Temperatur, z. B. bei 30 °C bis 200 °C durchgeführt werden kann. Die Trocknungsdauer liegt dann in der Regel im Bereich von wenigen Minuten bis 48 h, z. B. 10 bis 240 Minuten. Bei Verwendung von strahlungshärtbaren Zusammensetzungen für die Herstellung der zweiten Beschichtung wird man anstelle oder in Kombination mit dem Trocknungsschritt eine Strahlungshärtung durch Einwirken energiereicher Strahlung wie UV-Licht oder Elektronenstrahlung durchführen.

Als zweite oder weitere Beschichtungszusammensetzungen kommen sowohl wässrige Beschichtungszusammensetzungen auf Basis wässriger Polymerdispersionen, sowie nicht wässrige Beschichtungssysteme, z. B. Polyesterlacke, Polymethylmethacrylat als auch strahlungshärtbare Beschichtungszusammensetzungen in Betracht.

Strahlungshärtbare Zusammensetzungen sind dem Fachmann bekannt, z. B. aus P.K.T. Oldring, "Chemistry

and Technology of UV- and EB-Formulations for Coatings and Paints", Vol. II, SITA Technology, London, 1991, und enthalten in der Regel als Hauptbestandteil ethylenisch ungesättigte Präpolymere, z. B. Urethanacrylate, Polyetheracrylate, Polyesteracrylate, Epoxidacrylate, Melaminacrylaten, Mischungen dieser Präpolymere oder Mischungen der Präpolymere mit ein- oder mehrfach ethylenisch ungesättigten niedermolekularen Verbindungen, sog. Reaktivverdünnern. Beispiele für geeignete strahlungshärtbare Zusammensetzungen beschreibt die EP-A 894780, auf deren Offenbarung Bezug genommen wird.

Beispiele für geeignete Polyesterlacke beschreibt z. B. H. Kittel, "Lehrbuch der Lacke und Beschichtungen", Bd. 2, 2. erweiterte Aufl., S. Hitzel Verlag, Stuttgart 1998. Als zweite Zubereitung kann auch geschmolzenes Polymethylmethacrylat auf die Erstbeschichtung aufgebracht werden.

In einer bevorzugten Ausführungsform des erfindungsgemäßen Verfahrens verwendet man als zweite Beschichtungszusammensetzung eine wässrige Zusammensetzung, die als Bindemittel eine wässrige Dispersion eines Polymeren P' enthält. Erfolgt das Aufbringen der zweiten Beschichtung nach dem "nass-in-nass"-Verfahren, setzt man als zweite und weitere Beschichtungszusammensetzung besonders bevorzugt eine Zusammensetzung auf Basis einer wässrigen Dispersion des Polymerisats P' ein.

Derartige Polymerzubereitungen sind dem Fachmann als Beschichtungsmittel auf Wasserbasis bekannt. Neben dem Polymer P' enthalten derartige Polymerzubereitungen die für Beschichtungsmittel üblichen Hilfsstoffe sowie gegebenenfalls Pigmente und Füllstoffe. In der Regel unterscheidet sich das Polymer der zweiten Zubereitung von dem Polymer der ersten Zubereitung durch die Glasübergangstemperatur $T_g$ des Polymers, die in der Regel oberhalb 0 °C und vorzugsweise im Bereich von 10 °C bis 80 °C, insbesondere im Bereich von 20 bis 60 °C, liegt.

Geeignete wässrige Zusammensetzungen auf Basis wässriger Polymerdispersionen, sind dem Fachmann bekannt. In der Regel handelt es sich dabei um Zusammensetzungen, deren Polymerisat P' ebenfalls einen hohen Anteil an hydrophoben Monomeren und einen geringen Anteil an hydrophilen Monomeren bzw. sogenannten Hilfsmonomeren aufweist. Der Anteil an Hilfsmonomeren liegt vorzugsweise unter 10 Gew.-%, bevorzugt unter 8 Gew.-% und besonders bevorzugt unter 5 Gew.-%, bezogen auf das Gesamtgewicht aller einpolymerisierten Monomere.

Als hydrophobe Monomere enthalten die Polymere P' die vorgenannten Monomere A, vorzugsweise die als bevorzugt angegebenen Monomere A und insbesondere eine Mischung aus Monomeren A1 und A2 einpolymerisiert. Das Gewichtsverhältnis von Monomeren A1:A2 liegt vorzugsweise oberhalb 1:2, insbesondere im Bereich von 1:1,9 bis 3:1 und speziell im Bereich von 1:1,5 bis 3,5:1. Typische Hilfsmonomere sind die vorgenannten Monomere B und C. Bevorzugte Hilfsmonomere sind Acrylsäure, Methacrylsäure, Acrylamid und Methacrylamid.

In einer bevorzugten Ausführungsform enthalten die Polymerisate P' neben den Monomeren A, B und gegebenenfalls C außerdem 0,1 bis 2 Gew.-% eines oder mehrerer, wenigstens zwei nicht konjugierte, olefinisch ungesättigte Doppelbindungen aufweisenden Monomers D und/oder 0,1 bis 10 Gew.-%, vorzugsweise 0,5 bis 5 Gew.-% eines vernetzend wirkenden Monomers E, das eine olefinische Doppelbindung und eine reaktive funktionelle Gruppe, ausgewählt unter Aldehyd-, Keto-, Anhydrid oder Epoxid-Gruppen, aufweist.

Beispiele für Monomere D sind außerdem Divinylaromaten wie Divinylbenzol, Divinyl- und Diallylester von aliphatischen oder aromatischen Dicarbonsäuren, z. B. Diallylphthalat, Divinylharnstoffverbindungen wie N,N-Divinylharnstoff und N,N'-Divinyl-N,N'-ethylenharnstoff (= N,N'-Divinylimidazolidin-2-on). Bevorzugte Monomere D sind die Ester der Acrylsäure und der Methacrylsäure mit linearen oder verzweigten $C_3$-$C_6$-Alkenolen, wie Acrylsäureallylester, Acrylsäuremethallylester, Acrylsäure-2-buten-1-yl-ester, Acrylsäure-3-buten-1-yl-ester, Acrylsäure-3-methyl-2-buten-1-yl-ester, Acrylsäure-3-methyl-3-buten-1-yl-ester, Acrylsäure-2-methyl-3-buten-2-yl-ester, Acrylsäure-5-hexen-1-ylester, Methacrylsäureallylester, Methacrylsäuremethallylester, Methacrylsäure-2-buten-1-yl-ester, Methacrylsäure-3-buten-1-yl-ester, Methacrylsäure-3-methyl-2-buten-1-yl-ester, Methacrylsäure-3-methyl-3-buten-1-yl-ester, Methacrylsäure-2-methyl-3-buten-2-yl-ester, Methacrylsäure-5-hexen-1-yl-ester, die Ester der Acrylsäure und der Methacrylsäure mit cyclischen $C_5$-$C_7$-Alkenolen, wie Acrylsäurecyclohexenylester, Methacrylsäurecyclohexenylester, Acrylsäuremethylcyclohexenylester und Methacrylsäuremethylcyclohexenylester, und die Ester der Acrylsäure und der Methacrylsäure mit polycyclischen $C_7$- bis $C_{12}$-Alkenolen, wie Acrylsäurenorbornen-ylester, Acrylsäuretricyclodecenylester, Methacrylsäurenorbornen-ylester und Methacrylsäuretricyclodecenylester. Bevorzugt sind Acrylsäureallylester, Acrylsäuremethallylester, Acrylsäuretricyclodecenylester, Methacrylsäureallylester, Methacrylsäuremethallylester und Methacrylsäuretricyclodecenylester, besonders bevorzugt sind Acrylsäureallylester und Methacrylsäureallylester und ganz besonders bevorzugt ist Methacrylsäureallylester, sowie die Diester von aliphatischen Diolen mit 3 bis 10 C-Atomen oder cycloaliphatischen Diolen mit 5 bis 16 C-Atomen wie Propan-1,3-diol, Butan-1,4-diol, Hexan-1,6-diol, Ethylenglykol, Diethylenglykol, Triethylenglykol, Dipropylenglykol, Cyclohexan-1,4-diol, 1,4-Bis(2-hydroxyprop-2-yl) cyclohexan oder 4,4'-Dihydroxycyclohexylpropan mit Acrylsäure und/oder Methacrylsäure.

Geeignete Monomere E sind insbesondere Glycidyl(meth)acrylat, Glycidylallylether, Maleinsäureanhydrid, Itaconsäureanhydrid, Methacrylsäureanhydrid, Diacetonylacrylamid und Diacetonylmethacrylamid. Polymerisate P', welche Monomere E einpolymerisiert enthalten, werden häufig zusammen mit wenigstens einer Verbindung E' eingesetzt, die wenigstens zwei $NH_2$-Gruppen aufweist. Verbindungen E' sind dem Fachmann bekannt. Bevorzugte Monomere E' sind die Dihydrazide aliphatischer $C_3$-$C_{12}$-Dicarbonsäuren, insbesondere das Dihydrazid der Adipinsäure. Die

Verbindungen E' werden üblicherweise in Mengen eingesetzt, dass das Molverhältnis von Aminogruppen der Verbindung E' zu einpolymerisierten Monomeren E im Bereich von 5:1 bis 1:5 liegt.

Hinsichtlich der Emulgatoren in den Zusammensetzungen der Polymerisate P' gilt das zuvor für die zur Herstellung der Basisbeschichtung verwendeten Zusammensetzungen Gesagte. Insbesondere enthalten die wässrigen Zusammensetzungen des Polymerisats P' wenigstens eine Kombination aus anionischem und nichtionischem Emulgator, wobei als anionischer Emulgator auch hier Verbindungen der Formel I oder deren Mischungen mit Salzen, vorzugsweise Natriumsalzen von Alkylsulfaten oder von Schwefelsäurehalbestern ethoxilierter Alkanole bevorzugt werden.

Geeignete wässrige Zusammensetzungen auf Basis wässriger Polymerdispersionen sind z. B. in der EP-A 469295, der DE-A 19514266, der DE-A 19749642, der DE-A 19845999, der EP-A-915071 und der DE-A 19810050 beschrieben, auf die hiermit ausdrücklich Bezug genommen wird.

Besonders geeignete zweite Zusammensetzungen sind solche, deren Polymere P' als monoethylenisch ungesättigte Monomere 40 bis 70 Gew.-% wenigstens eines der vorgenannten Monomere A1, insbesondere eines vinylaromatischen Monomers, speziell Styrol und 30 bis 60 Gew.-% wenigstens eines Acrylesters von linearen und verzweigten $C_1$-$C_{10}$-Alkanolen, vorzugsweise Ethylacrylat, n-Butylacrylat und/oder 2-Ethylhexylacrylat einpolymerisiert enthalten. Als Hilfsmonomere sind 0,1 bis 5 Gew.-%, bevorzugt 0,5 bis 2,5 Gew.-% Monomere B, insbesondere Acrylsäure oder Methacrylsäure, und gegebenenfalls 0 bis 3 Gew.-%, z. B. 0,1 bis 3 Gew.-% Monomere C, z. B. Acrylamid oder Methacrylamid einpolymerisiert enthalten.

Bei niedrig pigmentierten Zusammensetzungen, insbesondere bei Klarlacken, sind die vorstehend beschriebenen Copolymere besonders geeignet, bei denen die vinylaromatischen Monomere ganz oder teilweise, insbesondere ganz, durch Methylmethacrylat ersetzt sind. Durch den erhöhten Anteil an Methylmethacrylat wird bei niedrig- oder nicht-pigmentierten Zubereitungen die Witterungsstabilität der Beschichtung verbessert. Bei höher pigmentierten Zusammensetzungen, z. B. bei einer Pigmentvolumenkonzentration $\geq 20$, sind Styrol-haltige Beschichtungen den Methylmethacrylathaltigen Beschichtungen zumindest gleichwertig und werden aus Kostengründen häufig bevorzugt.

Ebenfalls besonders geeignet als zweite Polymerzubereitung sind wässrige Zusammensetzungen, worin die Polymere P' 70 bis 99,9 Gew.-%, insbesondere 80 bis 99,5 Gew.-% wenigstens eines Methacrylsäureesters von $C_1$-$C_{10}$-Alkanolen, bevorzugt n-Butylmethacrylat, als Hauptmonomer, 0 bis 20 Gew-% davon verschiedene Monomere A und 0,1 bis 10, vorzugsweise 0,5 bis 5 Gew.-% Monomere B und/oder C einpolymerisiert enthalten. Derartige Zubereitungen werden in der DE 198 10 050 beschrieben, auf die hiermit in vollem Umfang Bezug genommen wird. Geeignet sind außerdem Zusammensetzungen, die ein Polymerisat P' enthalten, das

- 80 bis 99,8 Gew.-%, vorzugsweise 90 bis 99,8 Gew.-% mindestens eines Monomers A, das vorzugsweise ausgewählt ist unter Estern der Acrylsäure mit $C_1$-$C_{12}$-Alkanolen, Estern der Methacrylsäure mit $C_1$-$C_8$-Alkanolen und Monovinylaromaten, und insbesondere unter Ethylacrylat, n-Butylacrylat, 2-Ethylhexylacrylat, Styrol, Methylmethacrylat und n-Butylmethacrylat,

- 0,1 bis 19,9 Gew.-% mindestens eines davon verschiedenen Monomers, ausgewählt unter Monomeren B und C, vorzugsweise unter $\alpha,\beta$-ethylenisch ungesättigten $C_3$-$C_6$-Mono- und Dicarbonsäuren, den Amiden und N-Alkylamiden dieser Carbonsäuren, speziell unter Acrylsäure, Methacrylsäure, Itaconsäure, Acrylamid und Methacrylamid,

- 0,1 bis 2 Gew.-% mindestens eines Monomers D, vorzugsweise ausgewählt unter Estern der Acrylsäure oder Methacrylsäure mit linearen oder verzweigten $C_3$-$C_6$-Alkenolen, cyclischen $C_5$-$C_7$-Alkenolen und polycyclischen $C_7$- bis $C_{12}$-Alkenolen, sowie den Diestern von aliphatischen oder cycloaliphatischen Diolen mit Acrylsäure und/oder Methacrylsäure und gegebenenfalls

- 0 bis 5 Gew.-% eines Monomers E, vorzugsweise eines Monomers E mit einer Keto-Gruppe und speziell unter Diacetonylacrylamid und Diacetonylmethacrylamid,

einpolymerisiert enthält, wobei der Gesamtgehalt an freie Säuregruppen tragenden Monomeren, bezogen auf die Gesamtmenge aller einpolymerisierten Monomeren, kleiner als 5 Gew.-% ist. Diese Zusammensetzungen können, sofern das Polymerisat P' ein Monomer E einpolymerisiert enthält, außerdem noch eine Substanz E' in den oben angegebenen Mengen enthalten. Derartige Zusammensetzungen sind beispielsweise aus der DE 19849555 bekannt, auf die hiermit in vollem Umfang Bezug genommen wird.

Die für die Herstellung der zweiten und gegebenenfalls weiteren Beschichtungen verwendeten Zusammensetzungen können als sogenannter Klarlack, d. h. in Form einer pigment- und füllstofffreien Zusammensetzung eingesetzt werden. Strahlungshärtbare Zusammensetzungen sowie Zusammensetzungen auf Basis von Polyesterharzen werden häufig unpigmentiert eingesetzt. Wässrige Zusammensetzungen auf Basis von Polymerisaten P' können sowohl gefüllt/pigmentiert als auch ungefüllt, d. h. als Klarlack eingesetzt werden.

Hinsichtlich des Füllstoff- und Pigmentgehaltes gilt das oben für die erste Zusammensetzung Gesagte.

Die erste und die zweite Zusammensetzung können sowohl mit gleicher als auch mit unterschiedlicher Pigmentvolumenkonzentration formuliert werden. In einer bevorzugten Ausführungsform des erfindungsgemäßen Verfahrens formuliert man die zweite Zusammensetzung mit einer PVK die um wenigstens 10 PVK-Einheiten, vorzugsweise um wenigstens 20 PVK-Einheiten unter der PVK der für die Basisbeschichtung verwendeten Zusammensetzung liegt.

Die zu beschichtenden Bauelemente aus Metall können aus den unterschiedlichsten Metallen bestehen. In der Regel handelt es sich bei den Metallen um eisenhaltige Metalle wie Stahl, um Buntmetalle wie Kupfer oder Messing, um Aluminium oder um aluminiumhaltige Legierungen, wobei Bauteile aus eisenhaltigen Metallen häufig oberflächenverzinkt sind. Die Bauteile aus Metall können auch mit einem Primer, auf Basis einer Einbrennlackierung, z. B. auf Basis eines eingangs erwähnten Polyesterlacks, versehen sein. Typischerweise handelt es sich bei den Bauelemente aus Metall um geformte oder um nicht geformte Bleche. Typische Bauelemente aus Metall wurden eingangs erwähnt. Eine bevorzugte Ausführungsform der Erfindung betrifft Dachbauelemente aus Metall. Hierbei handelt es sich um Bauteile, wie sie üblicherweise zum Decken von Dächern verwendet werden, die aber im Unterschied zu herkömmlichen Dachbauelementen nicht aus Ton oder Beton gefertigt sind, sondern aus Metallblech, insbesondere aus Stahlblech, das gegebenenfalls auch verzinkt sein oder eine Einbrennlackierung aufweisen kann. Beispiele für Dachbauelemente sind Dachpfannen, Firststeine, Kaminverkleidungen, Ortgangsteine und Lüftungsrohre, weiterhin Verkleidungen von Dachfenstern.

Die nach dem erfindungsgemäßen Verfahren beschichteten Metallbauteile sind neu und ebenfalls Gegenstand der vorliegenden Erfindung. Diese Metallbauteile weisen überraschenderweise eine bessere mechanische Stabilität der Beschichtung gegenüber mechanischen Belastungen beim Verarbeiten, insbesondere bei niedrigen Umgebungstemperaturen auf. Anders als bei konventionellen Beschichtungen führt ein Verbiegen des Gegenstandes oder eine sonstige mechanische Belastung, wie sie beispielsweise beim Bohren, Hämmern, Nageln oder Schneiden des Bauteils auftritt, nicht zu einem Abplatzen der Beschichtung. Zudem zeigen die Beschichtungen nur eine geringe Neigung zum Weißanlaufen. Außerdem sind die Beschichtungen witterungsstabil, d. h. bei Bewitterung, insbesondere bei Einwirkung von UV-Strahlung treten keine oder nur in geringem Ausmaß Verfärbungen oder Rissbildung auf.

Beispiele

I. Als Bindemittel für den Primer eingesetzte wässrige Polymerdispersionen ED1 und ED2 sowie VD1 bis VD5

ED1: Gemäß Herstellungsbeispiel D1 der DE-A 3930585 wurde eine wässrige Polymerdispersion aus 50 Gewichtsteilen n-Butylacrylat, 35 GT 2-Ethylhexylacrylat, 15 GT Styrol, 3 GT Acrylsäure und 1,25 GT Acrylamid in Gegenwart von 1,5 Gew.-Teilen anionischem Emulgator (Natriumsalz des disulfonierten Monododecyldiphenylethers) und 1,0 Gew.-Teilen nichtionischem Emulgator (ethoxilierter $C_{16}/C_{18}$-Fettalkohol mit einem mittleren Ethoxilierungsgrad von 18) hergestellt. Anschließend gab man hierzu 10 g Zinkoxid in Form einer wässrigen Lösung von 10 g Zinkoxid und 10 g Ammoniumhydrogencarbonat in 30 g 28 %igem wässrigem Ammoniak. Der Feststoffgehalt der Dispersion betrug 58 Gew.-%. Die Glasübergangstemperatur des Polymerisats betrug -25 °C.

ED2: Die Herstellung erfolgte analog ED1, jedoch gab man anstelle der ammoniakalischen Zinkoxid-Lösung 1,4 g Calciumoxid als 5-gew.-%ige Schlemme zu. Der Feststoffgehalt der Dispersion betrug 58 Gew.-%. Die Glasübergangstemperatur des Polymerisats betrug -25 °C.

VD1 bis VD5: Die Herstellung erfolgte durch radikalische wässrige Emulsionspolymerisation der in Tabelle 1 angegebenen Monomerzusammensetzung in Gegenwart von 0,5 Gew.-Teilen Natriumlaurylsulfat als Emulgator. Die Dispersionen wurden mit Ammoniak auf pH 8 eingestellt. Die Monomerenzusammensetzung der Polymere sowie ihre Glasübergangstemperaturen.sind in Tabelle 1 angegeben.

Tabelle 1

| | Einpolymerisierte Monomere | | | | |
|---|---|---|---|---|---|
| Dispersion | Styrol [GT][1)] | n-Butylacrylat [GT] | Acrylsäure [GT] | γ-Methacryloxypropyltrimethoxysilan [GT] | $T_g$[2)] [°C] |
| VD1 | 54 | 44 | 2 | 0,5 | +35 |
| VD2 | 49 | 49 | 2 | 0,5 | +25 |
| VD3 | 49 | 49 | 2 | - | +23 |

1) GT = Gewichtsanteile

2) Glasübergangstemperatur bestimmt via E-Modul gemäß Zosel

Tabelle 1 (fortgesetzt)

| | Einpolymerisierte Monomere | | | | |
|---|---|---|---|---|---|
| Dispersion | Styrol [GT][1)] | n-Butyl-acrylat [GT] | Acrylsäure [GT] | γ-Methacryloxypropyltrimethoxysilan [GT] | $T_g$[2)] [°C] |
| VD4 | 54 | 44 | 2 | - | +32 |
| VD5 | 29 | 69 | 2 | - | -15 |

1) GT = Gewichtsanteile
2) Glasübergangstemperatur bestimmt via E-Modul gemäß Zosel

Zusätzlich wurde aus jeweils 50 Gewichtsteilen der Dispersionen VD3 und VD5 ein Polymerblend hergestellt.

II. Wässrige Dispersionen des Polymerisats P' (Dispersionen D6 und D7)

a) Herstellungsvorschrift für D6

In einem Polymerisationsgefäß legte man 627,6 g entionisiertes Wasser, 69,4 g Emulgatorlösung vor und erwärmte auf 82 °C. In einem Zulaufgefäß 1 stellte man eine Emulsion aus

| | |
|---|---|
| 605,4 g | entionisiertes Wasser |
| 17,3 g | Emulgatorlösung |
| 1211,7 g | n-Butylmethacrylat |
| 18,2 g | Methacrylsäure |
| 18,3 g | Butandioldiacrylat |
| 60,8 g | 20 gew.-%ige Lösung von Diacetonacrylamid in Wasser |
| 121,2 g | 20 gew.-%ige Lösung von Acrylamid in Wasser |

her. In einem zweiten Zulaufgefäß 2 stellte man eine Lösung von 1,7 g Natriumperoxodisulfat in 68,9 g Wasser her. Dann gab man unter Beibehaltung der 85 °C nacheinander in einer Portion 100 g von Zulauf 1 und 16,3 g von Zulauf 2 in die Vorlage. Anschließend gab man, über räumlich getrennte Zuläufe zeitgleich beginnend, die Restmengen von Zulauf 1 innerhalb 2,5 h und von Zulauf 2 innerhalb 2,6 h unter Beibehaltung der 85 °C in das Polymerisationsgefäß. Nach Beendigung von Zulauf 2 ließ man 1 h nachpolymerisieren, kühlte auf 60 °C ab, neutralisierte mit Ammoniak (pH ≈ 7,5) und setzte 148 g einer 12 gew.-%igen Lösung von Adipinsäuredihydrazid in Wasser zu, rührte weitere 30 min bei 60 °C und kühlte dann auf Raumtemperatur. Der Feststoffgehalt der erhaltenen Dispersion lag bei etwa 45 Gew.-%.

Emulgatorlösung: 28 gew.-%ige Lösung des Natriumsalzes eines Fettalkoholethersulfats in Wasser ($C_{12}$-$C_{14}$-Alkyl, 2,5 Ethylenoxideinheiten).

b) Dispersion D7

Durch radikalische Emulsionspolymerisation von 53,5 Gew.-Teilen Methylmethacrylat, 45 Gew.-Teilen Ethylhexylacrylat, 1 Gew.-Teil Methacrylsäure und 0,5 Gew.-Teilen Methacrylamid in Gegenwart von 0,5 Gew.-Teilen DOWFAX® 2A1 (berechnet als Feststoff) hergestelltes Emulsionspolymerisat. Die erhaltene Dispersion wurde mit Natronlauge auf pH 8 eingestellt. Der Feststoffgehalt der erhaltenen Dispersion lag bei etwa 50 Gew.-%. Die Glasübergangstemperatur $T_g$ des erhaltenen Polymerisates betrug 28 °C, bestimmt mittels DSC.

III.Herstellung der Beschichtungszusammensetzungen

Alle Dispersionen wurden auf Feststoffgehalte von 50 Gew.-% eingestellt.

1. Primerzusammensetzung

Die nach I. hergestellten Polymerdispersionen ED1, ED2 und VD1 bis VD5 wurden zu Farben mit einem PVK 40 formuliert. Hierzu konfektionierte man zunächst 1000 Gew-Teile Dispersion VD1-VD5 (50 %ig) mit 5 g eines handelsüblichen Entschäumers (Tego Foamex® 825 der Th. Goldschmidt AG) und 50 g eines technischem Gemischs aus Di-n-butylestern der Bernstein-, Glutar- und Adipinsäure. Die Dispersion ED1 und ED2 wurden unkonfektioniert verarbeitet.

Dann suspendierte man in Gegenwart geringer Mengen von Netzmitteln, Entschäumern, Viskositätsmodifizierern und einem Biozid 33,6 Gew.-Teile eines handelsüblichen Füllstoffgemischs (Calciumcarbonat/Calciumsilikat) sowie 8,7 Gew.-Teile schwarzes Eisenoxid-Pigment in 13,2 gew.-Teilen Wasser und gab hierzu 44,5 Gew.-Teile der konfektionierten Dispersion bzw. eine entsprechende Menge von ED1 oder ED2. Die PVK der Farbe betrug etwa 40.

2. Zweite Beschichtungszusammensetzung

Zunächst wurden je 1000 g der Dispersionen D6 und D7 wie unter 1. beschrieben konfektioniert. Dann suspendierte man 38 g schwarzes Eisenoxid-Pigment in etwa 30 g Wasser und gab hierzu 600 g konfektionierte Polymerdispersion. Man erhielt eine Farbe mit einer Pigmentvolumenkonzentration von etwa 4.

III. Prüfung der anwendungstechnischen Eigenschaften

Zur Prüfung der anwendungstechnischen Eigenschaften wurden als Gegenstände verzinkte Coil-coated-Bleche eingesetzt. Die Bleche wurden auf 40 °C vorgewärmt und jeweils eine der vorstehend beschriebenen Zubereitung in einer Auftragsmenge von 250 g/$m^2$ aufgebracht. Das Aufbringen erfolgte mittels Spritzen. Innerhalb von weniger als 5 Minuten wurden auf die noch nasse erste Zubereitung Steinchen einer mittleren Korngröße von 2 mm aufgestreut, der überschüssige Rest durch Abblasen mit Druckluft entfernt, und innerhalb von weiteren 5 Minuten eine zweite Zubereitung durch Spritzen in einer Menge von 100 g/$m^2$ aufgebracht. Der so erhaltene nass-in-nass beschichtete Gegenstand wurde anschließend für ca. 45 Minuten bei 60 bis 65 °C getrocknet.

Zur Bestimmung des Enthaftungsneigung wurden die beschichteten und getrockneten Bleche bei 5 °C entlang einer Kante um ca. 90° gebogen. Die Beurteilung der durch die mechanische Belastung entstandenen Enthaftung wurde visuell durchgeführt. Der Beurteilung wurde folgende Notenskala zugrundegelegt:

0 = nicht vorhanden
1 = schwach erkennbar
2 = gut erkennbar
3 = auffallend
4 = stark auffallend
5 = sehr stark auffallend

Tabelle 2:

| Ergebnisse der anwendungstechnischen Prüfung | | | |
|---|---|---|---|
| Beispiel | erste Zusammensetzung/Dispersion | zweite Zubereitung Dispersion | Enthaftung |
| V1 | VD1 | D6 | 4 |
| V2 | VD2 | D6 | 4 |
| V3 | VD3 | D6 | 4 |
| V4 | VD4 | D6 | 4-5 |
| V5 | VD3/VD5 | D6 | 3 |
| B1 | ED1 | D6 | 1 |
| B2 | ED2 | D6 | 1 |
| B3 | ED1 | D7 | 1 |
| B4 | ED2 | D7 | 1 |

Die Beispiele zeigen deutlich, dass die erfindungsgemäße Verwendung erster Zubereitungen auf Basis der Dispersionen ED1 und ED2 als erste Zusammensetzung zu Beschichtungen mit deutlich verbesserten Haftungseigenschaften bzw. einer deutlich geringeren Enthaftungsneigung bei mechanischer Beanspruchung von Bauteilen aus Metall führen.

## Patentansprüche

1. Verwendung von wässrigen Zusammensetzungen, enthaltend:

   i) wenigstens eine wässrige Polymerdispersion, deren Polymerisat P eine Glasübergangstemperatur unterhalb 0 °C aufweist und das

   - 80 bis 99,5 Gew.-% wenigstens eines monoethylenisch ungesättigten, hydrophoben Monomers A,
   - 0,5 bis 10 Gew.-% wenigstens einer ethylenisch ungesättigten Mono- oder Dicarbonsäure oder deren Anhydrid als Monomer B, und gegebenenfalls
   - 0 bis 10 Gew.-% eines oder mehrerer von den Monomeren A und B verschiedenen ethylenisch ungesättigten Monomers C, einpolymerisiert enthält, wobei sich die Gewichtsanteile der Monomere A, B und C zu 100 Gew.-% addieren,

   ii) wenigstens ein wasserlösliches Salz oder Komplexsalz eines wenigstens zweiwertigen Metallkations,

   zur Herstellung einer Basisbeschichtung für die Beschichtung von Bauteilen aus Metall.

2. Verwendung nach Anspruch 1, wobei das das wenigstens zweiwertige Kation ausgewählt ist unter $Zn^{2+}$ und $Ca^{2+}$.

3. Verwendung nach einem der vorhergehenden Ansprüche, wobei in der Zusammensetzung das Molverhältnis von Carboxylgruppen der Monomere B zu Äquivalenten des Metallkations im Bereich von 10:1 bis 1:10 liegt.

4. Verwendung nach einem der vorhergehenden Ansprüche, wobei das Monomer A ausgewählt ist unter den $C_1$-$C_{10}$-Alkylestern der Acrylsäure, den $C_1$-$C_{10}$-Alkylestern der Methacrylsäure und vinylaromatischen Verbindungen.

5. Verwendung nach einem der vorhergehenden Ansprüche, wobei das Monomer B ausgewählt ist unter Acrylsäure und Methacrylsäure.

6. Verwendung nach einem der vorhergehenden Ansprüche, wobei die Zusammensetzung, bezogen auf ihr Gesamtgewicht, 10 bis 50 Gew.-% wenigstens eines Polymerisats P enthält.

7. Verwendung nach einem der vorhergehenden Ansprüche, wobei die Zusammensetzung je 100 Gew.-Teile Polymerisat P 5 bis 300 Gew.-Teile wenigstens eines anorganischen Füllstoffs, wenigstens eines Pigments oder einer Mischung aus wenigstens einem anorganischen Füllstoff und wenigstens einem Pigment als Komponente iii) enthält.

8. Verwendung nach einem der vorhergehenden Ansprüche, wobei das Bauteil ein Formteil aus Metallblech ist.

9. Verfahren zum Beschichten von Bauteilen aus Metall durch Aufbringen einer ersten Beschichtungszusammensetzung als Basisbeschichtung auf die zu beschichtende Oberfläche des Bauteils und anschließendes Aufbringen wenigstens einer weiteren Beschichtungszusammensetzung auf die mit der Basisbeschichtung versehene Oberfläche, **dadurch gekennzeichnet, dass** die Basisbeschichtung ausgewählt ist unter Zusammensetzungen wie in einem der Ansprüche 1 bis 7 definiert.

10. Verfahren nach Anspruch 9, **dadurch gekennzeichnet, dass** man die weitere Beschichtungszusammensetzung auf die mit der Basisbeschichtung versehene Oberfläche aufbringt, bevor die Basisbeschichtung getrocknet ist.

11. Verfahren nach Anspruch 10, **dadurch gekennzeichnet, dass** man vor dem Trocknen der ersten Zusammensetzung ein teilchenförmiges Gut mit mittleren Teilchengrößen oberhalb 0,1 mm aufbringt.

12. Verfahren nach einem der Ansprüche 9 bis 11, **dadurch gekennzeichnet, dass** die wenigstens eine weitere Beschichtungszusammensetzung als Bindemittel wenigstens eine wässrige Dispersion eines Polymerisats P' enthält.

13. Verfahren nach Anspruch 12, **dadurch gekennzeichnet, dass** das Polymerisat P' eine Glasübergangstemperatur im Bereich von 10 °C bis 80 °C aufweist.

14. Verfahren nach einem der Ansprüche 9 bis 13, wobei man die erste Zusammensetzung in einer Menge von 50

bis 500 $g/m^2$, gerechnet als nichtflüchtige Bestandteile der Zusammensetzung, aufträgt.

**15.** Beschichtetes Bauteil aus Metall, erhältlich durch ein Verfahren gemäß einem der Ansprüche 9 bis 14.

Europäisches Patentamt

# EUROPÄISCHER TEILRECHERCHENBERICHT

der nach Regel 45 des Europäischen Patentübereinkommens für das weitere Verfahren als europäischer Recherchenbericht gilt

Nummer der Anmeldung
EP 02 00 2565

## EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (Int.Cl.7) |
|---|---|---|---|
| X | DE 10 51 436 B (ROHM & HAAS) 26. Februar 1959 (1959-02-26) * Spalte 6, Zeile 10; Ansprüche; Beispiele * | 1-6 | C09D5/02 B05D7/16 |
| X | EP 0 587 332 A (ROHM & HAAS) 16. März 1994 (1994-03-16) * Seite 4, Zeile 36; Beispiele; Tabelle 5.1 * | 1-7 | |
| X | US 4 826 907 A (MURAO KAZUHIRO ET AL) 2. Mai 1989 (1989-05-02) * Spalte 12, Zeile 13 - Zeile 55; Beispiel C1 * | 1-8 | |
| A | EP 0 726 334 A (ADW CHEM PROD BV) 14. August 1996 (1996-08-14) * Anspruch 6 * | 9 | |

RECHERCHIERTE SACHGEBIETE (Int.Cl.7)

C09D
B05D
A55X

## UNVOLLSTÄNDIGE RECHERCHE

Die Recherchenabteilung ist der Auffassung, daß ein oder mehrere Ansprüche, den Vorschriften des EPÜ in einem solchen Umfang nicht entspricht bzw. entsprechen, daß sinnvolle Ermittlungen über den Stand der Technik für diese Ansprüche nicht, bzw. nur teilweise, möglich sind.

Vollständig recherchierte Patentansprüche:

Unvollständig recherchierte Patentansprüche:

Nicht recherchierte Patentansprüche:

Grund für die Beschränkung der Recherche:

Siehe Ergänzungsblatt C

| Recherchenort | Abschlußdatum der Recherche | Prüfer |
|---|---|---|
| DEN HAAG | 3. Juni 2002 | Schueler, D |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C09)

Europäisches Patentamt

**UNVOLLSTÄNDIGE RECHERCHE**
**ERGÄNZUNGSBLATT C**

Nummer der Anmeldung
EP 02 00 2565

Unvollständig recherchierte Ansprüche:
1-15

Grund für die Beschränkung der Recherche:

Die geltenden Patentansprüche 1-15 beziehen sich auf eine unverhältnismäßig große Zahl möglicher Produkte/Verfahren. In der Tat umfaßt der Begriff "wasserlösliches Salz oder Komplexsalz" so viele Wahlmöglichkeiten, Veränderliche, mögliche Permutationen und/oder Einschränkungen, wie in der Beschreibung S. 7 Z. 30 - S. 9 Z. 2 zum Teil an- und aufgeführt,
dass sie im Sinne von Art. 84 EPÜ in einem solche Maße unklar oder zu weitläufig gefasst erscheinen, als daß sie eine sinnvolle Recherche ermöglichten. Daher wurde die Recherche auf die Teile der Patentansprüche gerichtet, die als klar und knapp gefaßt gelten können, nämlich wie diese in den Ausführungsbeispielen angegeben sind, einschließlich nahverwandter homologer Verbindungen.

**ANHANG ZUM EUROPÄISCHEN RECHERCHENBERICHT ÜBER DIE EUROPÄISCHE PATENTANMELDUNG NR.** EP 02 00 2565

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-06-2002

| Im Recherchenbericht angeführtes Patentdokument | | Datum der Veröffentlichung | Mitglied(er) der Patentfamilie | | Datum der Veröffentlichung |
|---|---|---|---|---|---|
| DE 1051436 | B | 26-02-1959 | BE | 526413 A | |
| | | | FR | 1099120 A | 30-08-1955 |
| | | | GB | 749801 A | 30-05-1956 |
| | | | NL | 83608 C | |
| | | | NL | 184955 B | |
| | | | US | 2754280 A | 10-07-1956 |
| EP 0587332 | A | 16-03-1994 | AT | 150776 T | 15-04-1997 |
| | | | AU | 658525 B2 | 13-04-1995 |
| | | | AU | 4482393 A | 17-03-1994 |
| | | | BR | 9303760 A | 07-06-1994 |
| | | | CA | 2105434 A1 | 12-03-1994 |
| | | | CN | 1084199 A | 23-03-1994 |
| | | | CZ | 9301848 A3 | 16-03-1994 |
| | | | DE | 69309202 D1 | 30-04-1997 |
| | | | DE | 69309202 T2 | 30-10-1997 |
| | | | EP | 0587332 A1 | 16-03-1994 |
| | | | ES | 2101958 T3 | 16-07-1997 |
| | | | FI | 933713 A | 12-03-1994 |
| | | | GR | 3022952 T3 | 30-06-1997 |
| | | | HK | 122897 A | 12-09-1997 |
| | | | HU | 66281 A2 | 28-11-1994 |
| | | | IL | 106769 A | 15-06-1998 |
| | | | JP | 6166864 A | 14-06-1994 |
| | | | MX | 9305281 A1 | 31-01-1995 |
| | | | NO | 932989 A | 14-03-1994 |
| | | | PL | 172107 B1 | 29-08-1997 |
| | | | SI | 9300472 A | 31-03-1994 |
| | | | SK | 95493 A3 | 07-09-1994 |
| | | | ZA | 9306349 A | 25-03-1994 |
| US 4826907 | A | 02-05-1989 | JP | 1786974 C | 10-09-1993 |
| | | | JP | 4077028 B | 07-12-1992 |
| | | | JP | 61089267 A | 07-05-1986 |
| EP 0726334 | A | 14-08-1996 | NL | 9500250 A | 02-09-1996 |
| | | | AT | 179762 T | 15-05-1999 |
| | | | DE | 69602291 D1 | 10-06-1999 |
| | | | DE | 69602291 T2 | 30-09-1999 |
| | | | EP | 0726334 A1 | 14-08-1996 |
| | | | ES | 2132834 T3 | 16-08-1999 |
| | | | JP | 8239619 A | 17-09-1996 |
| | | | US | 5632828 A | 27-05-1997 |

EPO FORM P0461

Für nähere Einzelheiten zu diesem Anhang : siehe Amtsblatt des Europäischen Patentamts, Nr.12/82